# EUROPEAN PATENT APPLICATION

(11) **EP 2 827 552 A2**
(43) Date of publication of application: **21.01.2015**
(21) Application number: 14176440.7
(22) Date of filing: 10.07.2014
(51) Int. Cl.: H04L 29/06, H04L 25/03

(54) **Apparatus and method for transmitting secure data in wireless communication system**

(30) Priority: 17.07.2013 KR 20130083985
(71) Applicant: Electronics and Telecommunications Research Institute, Daejeon-city 305-350 (KR)
(72) Inventor: Baek, Seon Yeob, Daejeon 305-390 (KR); Park, Jongwook, Daejeon 305-390 (KR)
(74) Representative: Betten & Resch

(57) **Abstract**

An apparatus and method for transmitting secure data in a wireless communication system are disclosed. The apparatus includes a key generation unit, and a transmission and reception unit. The key generation unit generates an encryption key stream that is used to convert plain text data into an encrypted data signal. The transmission and reception unit obtains wireless channel state information from a received pilot signal and transmits the obtained wireless channel state information to the key generation unit, and encrypts the plain text data based on the encryption key stream and transmits the encrypted plain text data to a counterpart terminal over a wireless channel. The key generation unit generates the encryption key stream based on the wireless channel state information, and transmits the encryption key stream to the transmission and reception unit.

## Description

### BACKGROUND OF THE INVENTION

### 1. Technical Field

The present disclosure relates to an apparatus and method for transmitting secure data and, more particularly, to an apparatus and method for transmitting and receiving secure data over a wireless channel in a wireless communication system.

### 2. Description of the Related Art

Many encryption technologies have been applied and used to and in wireless communication systems. However, these technologies are problematic in that they are dependent upon computational difficulty, rather than the mathematical impossibility of the key acquisition of eavesdroppers. With an increase in the available computational capability of eavesdroppers, the usefulness of such methods has been reduced. Therefore, the construction of encryption technology using absolute confidentiality is superior to technology based on the assumption of difficulty in computation.

As a related technology, Korean Patent No. 1247173 entitled "Generation of Perfect Private Key in Wireless Communication Network" discloses a technology that generates a perfect random private key between a plurality of terminals over a wireless communication network so that it is mathematically impossible to derive or infer the key even when an eavesdropper has confidence.

The technology disclosed in Korean Patent No. 1247173 generates a private key based on the reciprocity of a wireless channel, and can generate a perfect random private key between two or more terminals over a wireless communication network.

However, the above-described technology disclosed in Korean Patent No. 1247173 is intended only to generate keys, and does not take into consideration the use of generated keys in encrypted communication.

As another related technology, Korean Patent No. 0904817 entitled "Method and Apparatus for Encryption of OTA Communication in Wireless Communication System" discloses a technology that, in order to protect a wireless interface from the decryption of an undesired interceptor in a wireless communication system, encrypts symbols in a physical layer and improves the encryption of data transmitted over a wireless link.

The above-described technology disclosed in Korean Patent No. 0904817 is configured to encrypt symbols using amplitude and phase information in a physical layer by means of an encryption stream of codewords.

However, the above-described technology disclosed in Korean Patent No. 0904817 is intended only to perform encryption and decryption in a physical layer using codewords based on the same key, and is different from the method of the present invention that performs encrypted communication using an encryption key stream obtained from a wireless channel without requiring key sharing.

### SUMMARY OF THE INVENTION

At least one embodiment of the present invention is intended to provide an apparatus and method for transmitting secure data in a wireless communication system in which a physical layer encryption key stream is generated based on a wireless channel state, plain text data is encrypted and decrypted, and the encrypted data is transmitted and received.

That is, with the development of the computational capability of eavesdroppers, computation-based encryption methods have become limited. In order to overcome this problem, the present invention is intended to replace the conventional computation-based wireless communication encryption methods with a wireless channel-based encryption method that can ensure absolute confidentiality. In this case, eavesdroppers cannot extract plain text data because he or she cannot obtain information about the communication channels of users that vary every moment.

Conventional data encryption methods are performed through operations using mathematical encryption algorithms. In contrast, in the present invention, a data sender extracts an encryption key stream directly from wireless channel state information and then encrypts plain text data in a physical layer. Accordingly, a separate mathematical encryption algorithm is not required. This results in economy of memory and the prevention of a problem attributable to loss of equipment, such as the divulgence of an encryption algorithm.

In the conventional encryption methods, a user who receives encrypted data decrypts the encrypted data through operations based on the same mathematical encryption algorithm as in an encryption process. In contrast, the present invention does not require separate decryption computation and equipment because naturally decrypted plain text data is received by a receiver. In this case, it is possible to simplify the structure of an encryption data receiver while improving security capability and to reduce cost.

When the variation in the wireless channel is small, the randomness of an encryption key stream extracted from wireless channel state information is deteriorated. In order to overcome this problem, the present invention enables a receiver to achieve the effect of generating a variation in the wireless channel by artificially modulating a pilot signal to be transmitted. In this case, the receiver who receives the pilot signal or the sender who encrypts and transmits data obtains channel response information similar to a variation in the wireless channel, and extracts a random encryption key stream from the channel response information. The sender who transmits the pilot signal or the receiver who receives the encrypted data decrypts the received encrypted data using the artificially modulated wireless channel state information.

Meanwhile, the present invention does not require central encryption key distribution because terminals extract an encryption key stream directly from a wireless channel between the terminals that perform wireless communication. Accordingly, ad-hoc or peer-to-peer communication that is not performed in conjunction with an encryption key distribution system, encrypted communication can be easily applied.

In accordance with an aspect of the present invention, there is provided an apparatus for transmitting secure data in a wireless communication system, including a key generation unit configured to generate an encryption key stream that is used to convert plain text data into an encrypted data signal; and a transmission and reception unit configured to obtain wireless channel state information from a received pilot signal and transmit the obtained wireless channel state information to the key generation unit, and to encrypt the plain text data based on the encryption key stream and transmit the encrypted plain text data to a counterpart terminal over a wireless channel, wherein the key generation unit generates the encryption key stream based on the wireless channel state information, and transmits the encryption key stream to the transmission and reception unit.

The wireless channel state information may include the phase information of the received pilot signal.

The key generation unit may transmit the phase information to the transmission and reception unit with the phase information set as an encryption key stream for a single symbol.

The transmission and reception unit may encrypt the plain text data in a physical layer using the encryption key stream for the single symbol.

The transmission and reception unit may include a transmission unit and reception unit; the transmission unit may include a transmission signal encryption unit configured to encrypt the plain text data in a physical layer using the encryption key stream from the key generation unit; and the reception unit may include a channel estimation unit configured to extract the wireless channel state information from the received pilot signal and transmit the extracted wireless channel state information to the key generation unit, and a received signal control unit configured to compensate for a data reception signal decrypted over a wireless.

The transmission unit may further include a transmission pilot control unit configured to calculate the pilot signal to be generated, and a pilot signal generation unit configured to generate the pilot signal calculated by the transmission pilot control unit.

The apparatus may further include a random information generation unit configured to generate random information used to modulate the pilot signal, and the transmission pilot control unit may calculate the pilot signal to be generated based on a previously stored representative pilot signal and the random information from the random information generation unit.

The received signal control unit may compensate for the decrypted data reception signal based on the random information from the random information generation unit.

In accordance with another aspect of the present invention, there is provided a method of transmitting secure data in a wireless communication system, including receiving, by a transmission and reception unit, a pilot signal from a counterpart terminal; estimating, by the transmission and reception unit, wireless channel state information from the pilot signal; generating, by a key generation unit, an encryption key stream based on the wireless channel state information; encrypting, by the transmission and reception unit, plain text data in a physical layer using the encryption key stream; and transmitting, by the transmission and reception unit, the data signal encrypted through the encryption to the counterpart terminal over a wireless channel.

The wireless channel state information may include the phase information of the received pilot signal.

Generating the encryption key stream may include setting the phase information as an encryption key stream for a single symbol.

Encrypting the plain text data may include encrypting the plain text data in a physical layer using the encryption key stream for a single symbol.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a diagram of a wireless network environment to which embodiments of the present invention are applied;
FIG. 2 is a diagram of the schematic configuration of a terminal to which an embodiment of the present invention has been applied;
FIG. 3 is a diagram of the configuration of the transmission unit illustrated in FIG. 2;
FIG. 4 is a diagram of the configuration of the reception unit illustrated in FIG. 2; and
FIG. 5 is a flowchart of a method of transmitting secure data in a wireless communication system according to an embodiment of the present invention.

### DESCRIPTION OF THE PREFERRED EMBODIMENTS

In a wireless communication system, interconnected random sources capable of providing absolute confidentiality can be obtained from wireless channel state information. In particular, when a wireless communication system is based on a time division duplex (TDD) method, two users that have established a communication link can obtain wireless channel state information within a specific period. In this case, an eavesdropper who has not established a wireless link with the two users may only observe a wireless channel state rarely associated with the wireless channel of the two users. This difference may be used for the generation of a perfect encryption key stream and the encrypted transmission of data. In the present invention, among two users who perform encrypted communication, a sender generates a physical layer encryption key stream using wireless channel state information observed from a receiver, encrypts plain text data using the encryption key stream, and then transmits the encrypted data. Furthermore, data encrypted in a physical layer and then transmitted by a sender may be allowed to be naturally decrypted by a wireless channel response and received by a receiver as plain text data. An eavesdropper receives encrypted data not associated with the plain text data because he or she experiences a wireless channel response independent of the two users who perform encrypted communication. Therefore, the eavesdropper cannot obtain the plain text data.

In the present invention, a secure data transmission method may be divided into the generation of an encryption key stream and physical layer encryption transmission and reception. The present invention employs a scheme of generating an encryption key stream directly from a naturally generated channel impulse response, like a conventional method of generating a private key using a wireless channel in the communication link of users who perform wireless communication. In the conventional method, both users extract wireless channel state information, generate the same private key, and use the same private key as a private key of an encryption algorithm. Thereafter, an encryption block or an encryption stream is generated using the private key and the encryption algorithm, and then encryption and decryption are performed. In contrast, in the present invention, only a sender generates an encryption key stream directly from wireless channel state information, and a receiver does not need to generate the same encryption key stream. Meanwhile, the present invention employs a method of determining a transmission encryption symbol or signal corresponding to an encryption key stream in a physical layer, rather than a common method of performing encryption in a higher layer. In the conventional physical layer encryption method, a sender encrypts plain text data using a mathematical encryption algorithm and a private key, and a receiver extracts plain text data by decrypting a received symbol or signal using the same encryption algorithm and the private key. In this case, a mathematical encryption algorithm is required for the physical layer encryption and decryption of the sender and receiver. In the present invention, a physical layer encryption method is used, but a mathematical encryption algorithm is not required because an encryption key stream is directly generated using wireless channel information.

An apparatus and method for transmitting secure data in a wireless communication system according to an embodiment of the present invention are described with reference to the accompanying drawings. Prior to the following detailed description of the present invention, it should be noted that the terms and words used in the specification and the claims should not be construed as being limited to ordinary meanings or dictionary definitions. Meanwhile, the embodiments described in the specification and the configurations illustrated in the drawings are merely examples and do not exhaustively present the technical spirit of the present invention. Accordingly, it should be appreciated that there may be various equivalents and modifications that can replace the embodiments and the configurations at the time at which the present application is filed.

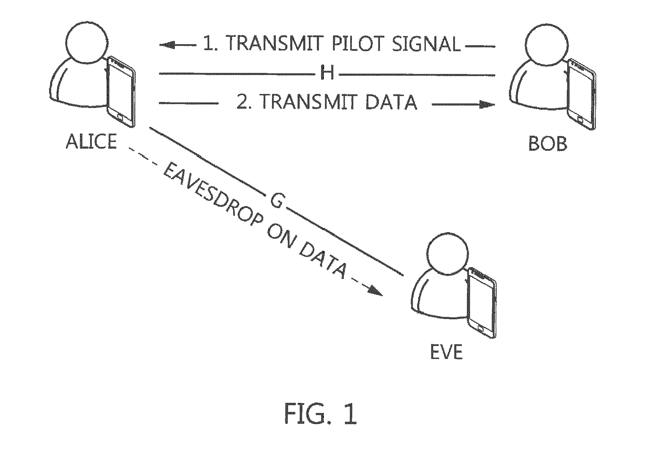

FIG. 1 is a diagram of a wireless network environment to which embodiments of the present invention are applied. A sender Alice transmits encrypted data (i.e., secure data) to a receiver Bob. In this case, an eavesdropper Eve attempts to eavesdrop on the encrypted data (i.e., the secure data) transmitted by the sender Alice and extract transmitted plain text data.

Before the sender Alice transmits data to the receiver Bob, the receiver Bob transmits an agreed pilot signal to the sender Alice. The sender Alice may obtain information about a wireless channel state h (for example, the phase shift of a received signal, the strength of a received signal, specific reception strength threshold value crossing rate, polarization type, etc.) between the sender and the receiver from the received pilot signal. Accordingly, the sender Alice encrypts plain text data to be transmitted in a physical layer using the obtained information about a wireless channel state h. Furthermore, the data encrypted by the sender Alice is transmitted to the receiver Bob over the same wireless channel.

While the encrypted data is being transmitted over the wireless channel between the sender Alice and the receiver Bob, it is naturally decrypted and received by the receiver Bob as plain text data.

Meanwhile, the eavesdropper Eve attempts to eavesdrop on the data that is transmitted to the receiver Bob by the sender Alice. However, since a wireless channel state g between the sender Alice and the eavesdropper Eve is not associated with the wireless channel state h between the sender Alice and the receiver Bob, the eavesdropper Eve receives the encrypted data not associated with the plain text data, with the result that the eavesdropper Eve cannot obtain the plain text data.

The terms "sender," "receiver" and "eavesdropper" are used in the above description of FIG. 1 for ease of description, and may be construed as a sender terminal, a receiver terminal and eavesdropper terminal, respectively.

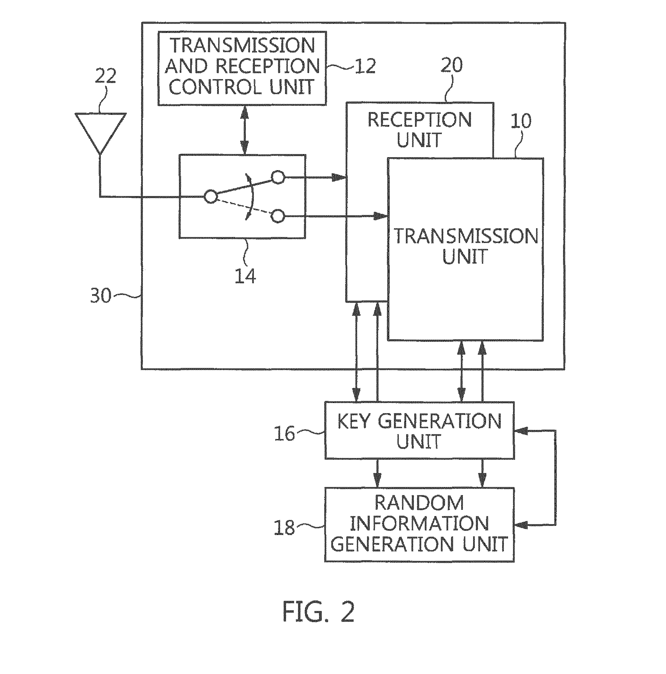

FIG. 2 is a diagram of the schematic configuration of a terminal to which an embodiment of the present invention has been applied. The terminal illustrated in FIG. 2 may be the terminal of a sender Alice and the terminal of the receiver Bob. Meanwhile, the sender and the receiver may be interchanged with each other, and thus the configuration illustrated in FIG. 2 may be applied to both the terminal of the sender and the terminal of the receiver in the same manner.

The terminal includes a transmission unit 10, a transmission and reception control unit 12, a transmission and reception switch 14, a key generation unit 16, a random information generation unit 18, a reception unit 20, and an antenna 22. In this case, the transmission unit 10, the transmission and reception control unit 12, the transmission and reception switch 14, and the reception unit 20 may be collectively referred to as a transmission and reception unit 30.

The key generation unit 16 generates an encryption key stream used to convert plain text data into an encrypted data signal. That is, the key generation unit 16 generates an encryption key stream based on the wireless channel state information of a pilot signal, and transmits the encryption key stream to the transmission and reception unit 30.

The transmission and reception unit 30 obtains wireless channel state information from the received pilot signal, and transmits the wireless channel state information to the key generation unit 16. The transmission and reception unit 30 converts plain text data into an encrypted data signal based on the encryption key stream generated by the key generation unit 16, and transmits the encrypted data signal to a counterpart terminal over a wireless channel.

In FIG. 2, the transmission unit 10 transmits a pilot signal or a data signal to a counterpart terminal. The reception unit 20 receives the pilot signal or data signal transmitted from the counterpart terminal.

The transmission unit 10 receives random information generated by the random information generation unit 18 in a specific situation, and uses the random information to generate a pilot signal. For example, when the variation in the phase information θₕ of a wireless channel is small, the receiver Bob may apply a symbol-based random phase value when transmitting a pilot signal. That is, the receiver may generate random phase information for each pilot symbol, may shift the phase of a pilot symbol by θᵣ, and may transmit the phase-shifted pilot symbol. In this case, a symbol-based random phase value (phase information) may be the random information. Accordingly, the random information may be used as information used to make an encryption key stream random. The application of random information may be applied to the strength of a transmission signal and polarization as well as phase information.

The transmission unit 10 receives an encryption key stream (or encryption key stream information) generated by the key generation unit 16, and uses the key encryption stream to encrypt a transmission signal (plain text data) in a physical layer. In this case, the key generation unit 16 may also provide encryption key stream generation information upon providing the encryption key stream to the transmission unit 10. The encryption key stream generation information is information indicative of how wireless channel state information was used to generate the encryption key stream. Since the encryption key stream generation information is auxiliary information, it may be omitted.

The reception unit 20 estimates wireless channel state information based on the received pilot signal, and transmits the wireless channel state information to the key generation unit 16. Furthermore, when random information has been used for a pilot signal, the reception unit 20 receives the random information from the random information generation unit 18, and uses the random information to reconstruct a decrypted data reception signal.

In FIG. 2, reference numeral 12 designates a transmission and reception control unit that controls the transmission and reception switch 14 so that the transmission unit 10 or reception unit 20 operates. That is, the transmission and reception control unit 12 connects the transmission and reception switch 14 to the transmission unit 10 when the transmission unit 10 needs to operate, thereby transmitting a pilot signal or an encrypted data signal from the transmission unit 10 via the antenna 22. In contrast, the transmission and reception control unit 12 connects the transmission and reception switch 14 to the reception unit 20 when the reception unit 20 needs to operate, thereby receiving a pilot signal or an encrypted data signal from a counterpart terminal via the antenna 22.

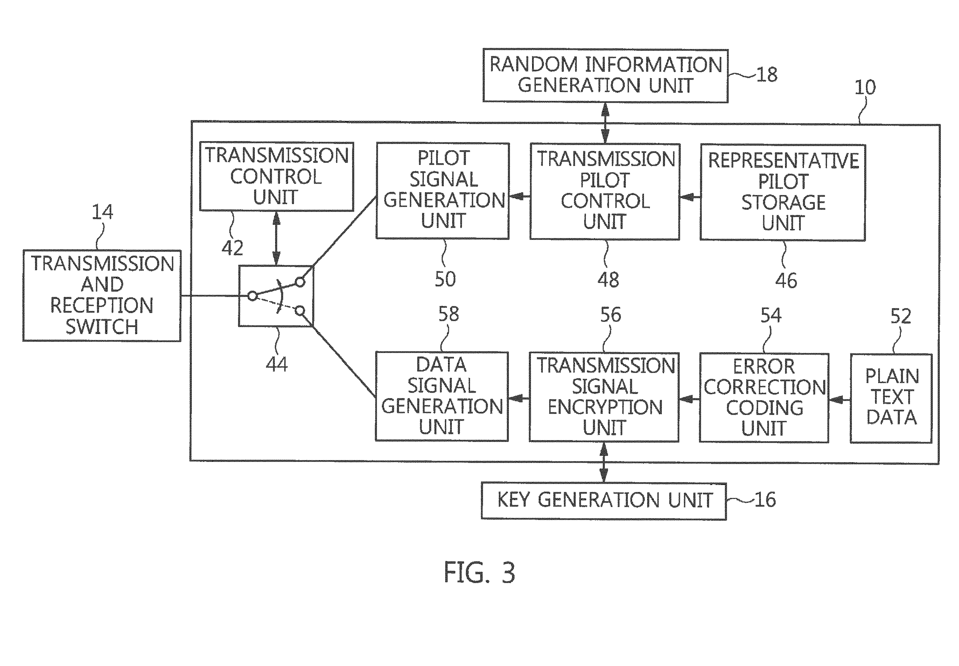

FIG. 3 is a diagram of the configuration of the transmission unit 10 illustrated in FIG. 2.

The transmission unit 10 provided in the terminal of a sender or the terminal of a receiver includes a transmission control unit 42, a transmission switch 44, a representative pilot storage unit 46, a transmission pilot control unit 48, a pilot signal generation unit 50, an error correction coding unit 54, a transmission signal encryption unit 56, and a data signal generation unit 58.

The transmission control unit 42 selects a signal to be transmitted at a specific time between a pilot signal and an encrypted data signal using the transmission switch 44.

The representative pilot storage unit 46 stores a representative pilot signal known to users in common.

The transmission pilot control unit 48 calculates a pilot signal to be generated. That is, the transmission pilot control unit 48 may calculate a pilot signal to be generated using the representative pilot signal stored in the representative pilot storage unit 46 and the random information generated by the random information generation unit 18.

The pilot signal generation unit 50 generates a pilot signal corresponding to the pilot signal calculated by the transmission pilot control unit 48. The pilot signal generated by the pilot signal generation unit 50 is transmitted toward a wireless channel through the transmission switch 44 and the transmission and reception switch 14.

The error correction coding unit 54 performs an error correction coding on plain text data 52.

The transmission signal encryption unit 56 receives the plain text data 52 having passed through the error correction coding unit 54, and receives the encryption key stream from the key generation unit 16. Then the transmission signal encryption unit 56 encrypts the transmission signal (that is, plain text data) in a physical layer using the encryption key stream.

The data signal generation unit 58 converts a data symbol encrypted by the transmission signal encryption unit 56 into a data signal, and transmits the data signal toward a wireless channel through the transmission switch 44 and the transmission and reception switch 14.

In the above-described transmission unit 10 of FIG. 3, the transmission control unit 42 selects a signal to be transmitted at a specific time between a pilot signal and a data signal using the transmission switch 44.

When the pilot signal is transmitted, the representative pilot signal and the random information generated by the random information generation unit 18 are transmitted to the transmission file control unit 48, and the transmission pilot control unit 48 calculates a pilot signal to be generated and notifies the pilot signal generation unit 50 of the calculated pilot signal. Thereafter, the pilot signal is transmitted toward a wireless channel through the transmission and reception switch 14 and the antenna.

When a data signal is encrypted and then transmitted, the plain text data 52 undergoes error correction coding in the error correction coding unit 54 and then input to the transmission signal encryption unit 56. The transmission signal encryption unit 56 encrypts a transmission signal in a physical layer using the encryption key stream received from the key generation unit 16. The encrypted data symbol is transmitted to the data signal generation unit 58. Thereafter, the encrypted data symbol is transmitted toward a wireless channel through the transmission and reception switch 14 and the antenna.

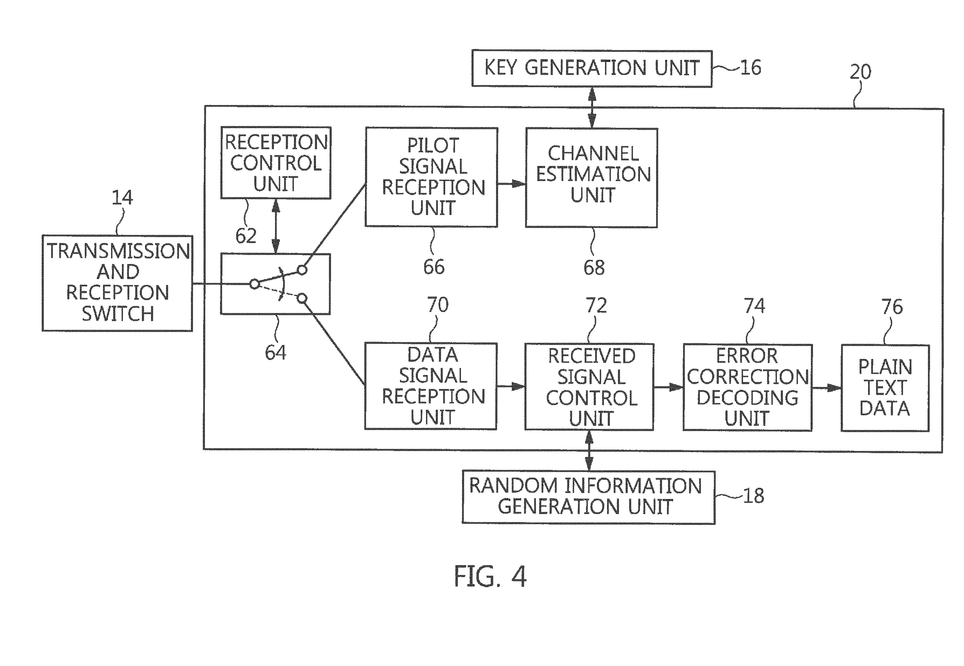

FIG. 4 is a diagram of the configuration of the reception unit 20 illustrated in FIG. 2.

The reception unit 20 provided in the terminal of the sender or the terminal of the receiver includes a reception control unit 62, a reception switch 64, a pilot signal reception unit 66, a channel estimation unit 68, a data signal reception unit 70, a received signal control unit 72, and an error correction decoding unit 74.

The reception control unit 62 selects a signal received at a specific time between a pilot signal and an encrypted data signal using the reception switch 64.

The pilot signal reception unit 66 receives the pilot signal via the reception switch 64.

The channel estimation unit 68 extracts wireless channel state information from the pilot signal received by the pilot signal reception unit 66, and transmits the wireless channel state information to the key generation unit 16.

The data signal reception unit 70 receives the data signal via the reception switch 64. In this case, the received data signal is a signal decrypted naturally by a wireless channel response (a symbol unit).

The received signal control unit 72 transmits the naturally decrypted data reception signal (a symbol unit) to the error correction decoding unit 74 over a wireless channel. If the received signal control unit 72 receives random information from the random information generation unit 18, the received signal control unit 72 compensates for the decrypted data reception signal based on the random information and then transmits it to the error correction decoding unit 74.

The error correction decoding unit 74 converts the signal (that is, the symbol-based data signal) from the received signal control unit 72 into original plain text data 76 by performing error correction decoding on it.

In the above-described reception unit 20 of FIG. 4, the reception control unit 62 selects a signal received at a specific time between the pilot signal and the data signal using the reception switch 64.

If the pilot signal is received, the received pilot signal is transmitted to the channel estimation unit 68 through the pilot signal reception unit 66. The channel estimation unit 68 extracts the wireless channel state information of the two users from the received pilot signal, and transmits the wireless channel state information to the key generation unit 16.

When the data signal is received, the received data is transmitted to the received signal control unit 72 through the data signal reception unit 70. The received signal control unit 72 transmits the naturally decrypted data reception signal directly to the error correction decoding unit 74, or compensates for the naturally decrypted data reception signal and then transmits it to the error correction decoding unit 74. The compensation process is performed when the variation in wireless channel state information (for example, phase information θₕ) is small. When the variation in the phase information θₕ of the wireless channel is small, the receiver Bob generates random phase information θᵣ for each pilot symbol, shifts the phase of the pilot symbol by θᵣ, and transmits it. In this case, the random phase information θᵣ is transmitted by the random information generation unit 18. In this case, the sender Alice thinks of θₕ+θᵣ as the phase information of a wireless channel response to a corresponding pilot symbol, and performs physical layer encryption using the information. Accordingly, when the receiver Bob receives the naturally decrypted data signal over a wireless channel, the receiver Bob obtains a plain text symbol θ by adding the random phase value θᵣ to the symbol received from the sender Alice because he or she knows the random phase value θᵣ generated by himself or herself (that is, the random information from the random information generation unit 18 is transmitted to the received signal control unit 72).

When the random information generation unit 18 is used because the variation in wireless channel is small as described above, the received signal control unit 72 compensates for the decrypted data reception signal using the random information generated by the random information generation unit 18. Then the compensated signal undergoes the error correction decoding of the error correction decoding unit 74, and thus be converted into the original plain text data 76.

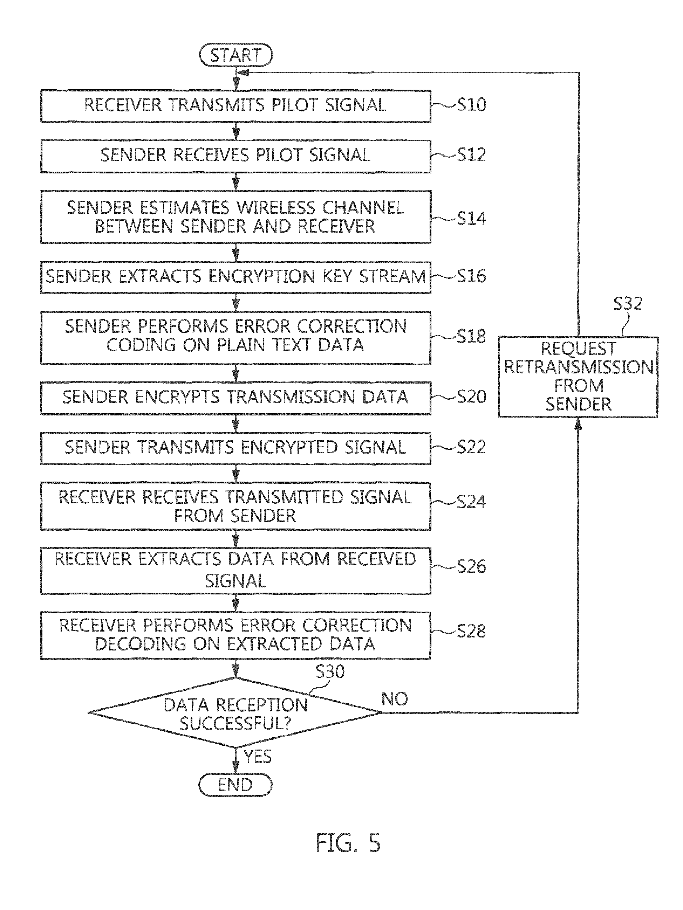

FIG. 5 is a flowchart of a method of transmitting secure data in a wireless communication system according to an embodiment of the present invention, and illustrates a procedure in which a sender Alice transmits encrypted data to a receiver Bob.

First, when encryption transmission starts, the receiver Bob transmits a pilot signal to the sender Alice at step S10.

In response to this, the sender Alice receives a pilot signal from the receiver Bob at step S 12.

The sender Alice estimates information about a wireless channel state between the two users based on the received pilot signal at step S 14, and extracts an encryption key stream using this information at step S16.

After the encryption key stream has been extracted, the sender Alice performs error correction coding (ECC) on plain text data to be transmitted at step S18.

Thereafter, the sender Alice encrypts the encoded plain text data using the encryption key stream extracted at step S16 in a physical layer at step S20.

The signal encrypted in a physical layer as described above is transmitted to the receiver Bob over a wireless channel at step S22. In this case, the signal encrypted in a physical layer and transmitted by the sender Alice is naturally decrypted over a wireless channel.

The receiver Bob receives the signal transmitted by the sender Alice at step S24, in which case the receiver Bob receives the signal converted into plain text. The receiver Bob extracts data from the signal at step S26.

The receiver Bob restores the extracted data to plain text data by performing error correction decoding on extracted data at step S28.

If the reception of plain text data is not successful (NO at step S30), the receiver Bob performs retransmission on the same plain text data by transmitting a retransmission message to the sender Alice at step S32.

The above-described steps S10 to S28 are described in detail below.

In a wireless network environment, a sender Alice encrypts confidential data and then transmits the encrypted data to the receiver Bob. First, a receiver Bob who will receive the confidential data transmits a pilot signal to the sender Alice. In this case, the pilot signal is generated and transmitted by the transmission pilot control unit 48 and the pilot signal generation unit 50.

The sender Alice estimates information about a wireless channel state h (that is, wireless channel state information) based on the received pilot signal, and extracts an encryption key stream using the information about a wireless channel state h. The information about a wireless channel state h is estimated by the channel estimation unit 58, and the encryption key stream is extracted by the key generation unit 16. The wireless channel state information that may be used for the extraction of an encryption key stream may include the phase information of a received pilot signal (phase shift), the strength of a received signal (that is, a pilot signal), and specific reception strength threshold value crossing rate.

For example, the process of extracting an encryption key stream using phase information is as follows. If the phase information of the wireless channel state h received by the sender Alice from the receiver Bob is θₕ, this value becomes an encryption key stream for a single symbol. The encryption key stream for a single symbol generated from the wireless channel state information is used to perform symbol-based encryption in a physical layer.

In this case, the process of performing symbol-based encryption in a physical layer is described in detail below. Plain text data 52 undergoes the frame-based error correction coding of the error correction coding unit 54, and is transmitted to the transmission signal encryption unit 56 in the form of binary bits. Thereafter, the binary bits are converted into analog symbols to be transmitted through the symbol modulation of the transmission signal encryption unit 56. In this case, the transmission signal encryption unit 56 performs encryption in a physical layer using the above extracted encryption key stream for a single symbol. As an example, the process of encrypting a single symbol in a physical layer using an encryption key stream θₕ acquired from the phase information of a wireless channel is as follows. If modulation is performed before encryption in a physical layer, a specific number of bits generally correspond to a single symbol. In this case, it is assumed that the phase of the corresponding symbol is θ. If physical layer encryption is performed using phase information, the sender Alice transmits the encryption key stream θₕ to the receiver Bob in the form of an encrypted symbol having a phase (θ-θₕ). Due to the reciprocity of a wireless channel, the transmitted wireless signal is received by the receiver Bob as a plain text symbol having a phase θ after passing through a wireless channel. That is, although the sender Alice transmits an encrypted symbol, it is naturally decrypted due to a wireless channel response between the sender Alice and the receiver Bob, the receiver Bob directly receives a plain text symbol. Accordingly, the receiver Bob does not need to perform a complicated decryption process. In an actual environment, slight error may occur in a received signal because of a factor, such as the shift of a wireless channel, thermal noise or the like. In this case, an erroneous data bit may be recovered through error correction decoding.

In this case, since wireless channels are independently established, a wireless channel state h between the sender Alice and the receiver Bob is different from a wireless channel state g between the sender Alice and an eavesdropper Eve. It is assumed that the sender Alice and the eavesdropper Eve have the phase information θ_{g} of a wireless channel state. If the sender Alice performs physical layer encryption using phase information, the sender Alice transmits an encrypted symbol having a phase (θ-θₕ) to the receiver Bob. In this case, the eavesdropper Eve receives an encrypted symbol having a phase (θ-θₕ+θ_{g}), which has passed over a wireless channel. This phase information is generally distributed uniformly. Accordingly, the eavesdropper Eve cannot restore the plain text data transmitted by the sender Alice to the receiver Bob because it is difficult to infer the original symbol.

The above-described reciprocity of a wireless channel Wireless means that when an uplink and a downlink share the same wireless channel during wireless transmission, the characteristics of the shared wireless channel are constant. In the frequency division duplex (FDD) method of a wireless communication system, an uplink and a downlink use different wireless channels. Accordingly, in order to obtain information about each of the links, it is necessary to transmit information about each of the channels in addition to a pilot signal. In contrast, a time division duplex (TDD) method does not need to transmit additional channel information in addition to a pilot signal because a sender and a receiver may share the same wireless channel through time division and make use of the reciprocity of the shared wireless channel. The present invention enables a sender and a receiver to obtain information about a shared wireless channel state without transmitting additional information in addition to a pilot signal using the reciprocity of a wireless channel. Furthermore, the present invention enables an encryption key stream to be generated and data to be encrypted using obtained information about a wireless channel state. Since additional information transmission is not required, the absolute confidentiality of the information about a wireless channel state is achieved. In other words, anyone except the sender and the receiver cannot obtain information about the data transmission channel.

The encryption method using phase information is described in detail below by taking QPSK modulation as an example. In QPSK modulation, two bits are mapped to a single symbol. If encryption has not been performed, "00" is mapped to a symbol having a phase of π/4, "01" is mapped to a symbol having a phase of 3π/4, "11" is mapped to a symbol having a phase of -π/4, and "10" is mapped to a symbol having a phase of -3π/4, in a gray coding scheme. If encryption is performed between the sender Alice and the receiver Bob, the phase of an encrypted symbol is shifted by -θₕ. Accordingly, in symbols transmitted by the sender Alice, "00" is mapped to a symbol having a phase of π/4-θₕ, "01" is mapped to a symbol having a phase of 3π/4-θₕ, "11" is mapped to a symbol having a phase of -π/4-θₕ, and "10" is mapped to a symbol having a phase of -3π/4-θₕ. If the sender Alice transmits encrypted symbols, the receiver Bob receives plain text symbols in which "00" has a phase of π/4, "01" has a phase of 3π/4, "11" has a phase of -π/4, and "10" has a phase of -3π/4. In this case, when the eavesdropper Eve receives encrypted symbols, he or she receives symbols having phases of π/4-θₕ+θ_{g}, 3π/4-θₕ+θ_{g}, -π/4-θₕ+θg and -3π/4-θₕ+θg, and thus cannot restore the original signal. Since θₕ and θ_{g} have no association and generally vary every moment, they have random values, and thus it is impossible to find out a specific rule.

Furthermore, if the difference between a variation in the wireless channel between the sender Alice and the receiver Bob and a variation in the wireless channel between the sender Alice and the eavesdropper Eve is small, the eavesdropper Eve may infer data being transmitted from the phase differences between successive symbols transmitted by the sender Alice. In order to prevent this problem, the present invention may employ a method of, when the variation in the phase information θₕ of a wireless channel is small, applying a symbol-based random phase value when the receiver Bob transmits a pilot signal. This symbol-based random phase value may be generated by the random information generation unit 18. The receiver Bob generates random phase information θᵣ for each pilot symbol, shifts the phase of the pilot symbol by θᵣ, and then transmits it. As described above, different pieces of random phase information may be applied to pilot symbols. In this case, if the phase information of a wireless channel response between the sender Alice and the receiver Bob is θₕ, the sender Alice thinks of θₕ+θᵣ as the phase information of the wireless channel response of the corresponding pilot symbol when the receiver Bob transmits a pilot symbol to which a random phase of θₕ has been applied. Accordingly, physical layer encryption is performed using this information. If the sender Alice encrypts a single symbol using an encryption key stream θ-θₕ-θᵣ obtained from a wireless channel and then transmits it, the encrypted symbol passes through a wireless channel having phase information θₕ and is then received by the receiver Bob as a symbol having phase information θ-θᵣ. Thereafter, the receiver Bob obtains a plain text symbol θ by adding the random phase value θᵣ to the symbol received from the sender Alice because he or she knows the random phase value θᵣ generated by himself or herself. Meanwhile, the eavesdropper Eve cannot decrypt the encrypted symbol because he or she receives a phase value of θ-θₕ-θᵣ+θ_{g}. If the receiver Bob applies random information when transmitting a pilot signal, he or she may perform encrypted communication while maintaining randomness even when a variation in the wireless channel is small. In this case, the sender Alice does not need to know random information applied by the receiver Bob.

As described above, in the wireless communication system to which the present invention has been applied, plain text data is encrypted and transmitted using wireless channel state information, and a receiver receives naturally decrypted plain text data.

In accordance with at least one embodiment of the present invention, in a wireless communication system, a physical layer encryption key stream can be generated using wireless channel state information, and plain text data can be encrypted and transmitted using the physical layer encryption key stream. Furthermore, data encrypted in a physical layer and transmitted by a sender can be naturally decrypted by a wireless channel response and received by a receiver as plain text data. In this case, since an eavesdropper experiences a wireless channel response independent of the two users, he or she receives encrypted data not associated with plain text data, and thus cannot infer the plain text data.

Meanwhile, the present invention has the advantages of a reduction in the use of calculation resources, no need for a separate encryption chip, a reduction in power consumption, economy of memory, and a reduction in cost because it is not necessary to use a separate mathematical encryption algorithm and encrypted data is naturally decrypted and then received by a receiver.

Furthermore, the present invention causes an artificial variation in the wireless channel by adding random information when the variation in the wireless channel is small, thereby maintaining the randomness of encrypted communication.

Although the preferred embodiments of the present invention have been disclosed for illustrative purposes, those skilled in the art will appreciate that various modifications, additions and substitutions are possible without departing from the scope and spirit of the invention as disclosed in the accompanying claims.

## Claims

1. An apparatus for transmitting secure data in a wireless communication system, comprising:
a key generation unit configured to generate an encryption key stream that is used to convert plain text data into an encrypted data signal; and
a transmission and reception unit configured to obtain wireless channel state information from a received pilot signal and transmit the obtained wireless channel state information to the key generation unit, and to encrypt the plain text data based on the encryption key stream and transmit the encrypted plain text data to a counterpart terminal over a wireless channel,
wherein the key generation unit generates the encryption key stream based on the wireless channel state information, and transmits the encryption key stream to the transmission and reception unit.

2. The apparatus of claim 1, wherein the wireless channel state information comprises phase information of the received pilot signal.

3. The apparatus of claim 2, wherein the key generation unit transmits the phase information to the transmission and reception unit with the phase information set as an encryption key stream for a single symbol.

4. The apparatus of claim 3, wherein the transmission and reception unit encrypts the plain text data in a physical layer using the encryption key stream for the single symbol.

5. The apparatus of one of claims 1 to 4, wherein:
the transmission and reception unit comprises a transmission unit and reception unit;
the transmission unit comprises a transmission signal encryption unit configured to encrypt the plain text data in a physical layer using the encryption key stream from the key generation unit; and
the reception unit comprises a channel estimation unit configured to extract the wireless channel state information from the received pilot signal and transmit the extracted wireless channel state information to the key generation unit, and a received signal control unit configured to compensate for a data reception signal decrypted over a wireless.

6. The apparatus of claim 5, wherein the transmission unit further comprises a transmission pilot control unit configured to calculate the pilot signal to be generated, and a pilot signal generation unit configured to generate the pilot signal calculated by the transmission pilot control unit.

7. The apparatus of claim 6, further comprising a random information generation unit configured to generate random information used to modulate the pilot signal,
wherein the transmission pilot control unit calculates the pilot signal to be generated based on a previously stored representative pilot signal and the random information from the random information generation unit.

8. The apparatus of claim 7, wherein the received signal control unit compensates for the decrypted data reception signal based on the random information from the random information generation unit.

9. A method of transmitting secure data in a wireless communication system, comprising:
receiving, by a transmission and reception unit, a pilot signal from a counterpart terminal;
estimating, by the transmission and reception unit, wireless channel state information from the pilot signal;
generating, by a key generation unit, an encryption key stream based on the wireless channel state information;
encrypting, by the transmission and reception unit, plain text data in a physical layer using the encryption key stream; and
transmitting, by the transmission and reception unit, the data signal encrypted through the encryption to the counterpart terminal over a wireless channel.

10. The method of claim 9, wherein the wireless channel state information comprises phase information of the received pilot signal.

11. The method of claim 10, wherein generating the encryption key stream comprises setting the phase information as an encryption key stream for a single symbol.

12. The method of claim 11, wherein encrypting the plain text data comprises encrypting the plain text data in a physical layer using the encryption key stream for a single symbol.
